# EUROPEAN PATENT APPLICATION

(11) **EP 3 483 819 A1**
(43) Date of publication of application: **15.05.2019**
(21) Application number: 18211196.3
(22) Date of filing: 02.08.2006
(51) Int. Cl.: G06Q 30/00

(54) **BID-BASED DELIVERY OF ADVERTISING PROMOTIONS OF INTERNET-CONNECTED MEDIA PLAYERS**

(30) Priority: 12.08.2005 US 70772805 P; 05.01.2006 US 32599306
(62) Divisional of application: 06800655.0
(71) Applicant: Rovi Solutions Corporation, San Jose CA 95002 (US)
(72) Inventor: PATTERSON, James, San Francisco, California 94107 (US); GERVIN, Adam, Mountain View, California 94041 (US)
(74) Representative: Pisani, Diana Jean

(57) **Abstract**

Media players are programmed to automatically connect to a media object distribution server upon activating events so that media promotions may be transmitted from the media object distribution server to the media players for display to their users. Determination of which media promotions are to be transmitted is based upon ranked lists for ad slots generated by on-line bidding for the ad slots, and pre-established budgets for advertisers having provided the media promotions. Following transmission of the media promotion to a media player, accounts for the manufacturer of the media player and the advertiser whose media promotion has been transmitted are updated by the media object distribution server so that the manufacturer may be compensated for the transmission and the advertiser may be charged for it.

## Description

### CROSS REFERENCE TO RELATED APPLICATIONS

This application claims priority to U.S. provisional application serial number 60/707,728 filed August 12, 2005, which is incorporated herein by reference.

### FIELD OF THE INVENTION

The present invention generally relates to Internet advertising and in particular, to bid-based delivery of advertising promotions on Internet-connected media players.

### BACKGROUND OF THE INVENTION

As the Internet increasingly becomes a source of information and entertainment for consumers, it correspondingly becomes more important for advertising purposes. Already, billions of dollars are being spent each year on Internet advertising, and Internet advertising is expected to increase dramatically as compared to advertising using traditional channels such as newspapers, television and radio.

In addition to its increasingly larger audience, the Internet has special attributes that also drive its remarkable growth as an advertising channel. For example, advertisers would like accountability for their advertising dollars, and the Internet facilitates arguably better quantitative measurement of advertising success than traditional advertising channels. When a consumer clicks on a hyperlink (embedded in an Internet advertisement) to the advertiser's website and makes a purchase, the success of that hyperlink in promoting the sale is readily measured. In contrast, the effectiveness of advertising using traditional channels is not as readily determined, and may require resorting to far less reliable techniques such as consumer surveys or measuring sales activity levels before and after the advertisement.

One form of Internet advertising that has become particularly prominent includes banner advertisements and popup advertisements. Since these ads appear on web pages generally related in some way to the products being advertised, they arguably provide some degree of targeted marketing. Banner ads, however, are easily ignored by readers, and popup ads are considered by consumers to be so objectionably distracting that popup blockers have become common place.

Another form of Internet advertising that has become especially successful financially is search engine advertising. Search engines, such as those made available on the Internet by Yahoo!® and Google™, typically search for documents or web pages on the World Wide Web that are identified by or otherwise associated with key words which match those specified by a search engine user in a search query. The search results are then typically provided to the user in the form of a list including hyperlinks to the identified documents or web pages.

When a user uses a search engine to search for information on a particular product or type of product, it may be advantageous for purveyors of such products to have their web pages identified at the top, or at least near the top, of the search results list, because consumers tend to click on the hyperlinks according to their rank order in the search results list (i.e., from top to bottom of the list) for additional information. One noteworthy advantage of search engine advertising over banner or popup ads is that the consumer in this case is actually looking for information on the purveyors' products, thus making search engine advertising arguably more effective (i.e., better targeted) than banner or popup ads.

As a method of conducting an advertising business using search engines, a bidding system may be implemented to influence the product purveyor's position in the search results list, as described in U.S. Patent No. 6,269,361, which has been assigned to GoTo.com of Pasadena, California, and entitled "System and Method for Influencing a Position on a Search Result List Generated by a Computer Network Search Engine." In such a bidding system, the highest bidders are given preferential treatment so that hyperlinks to their web pages are in higher ranked positions in the search results list. Of course, non-paying hyperlinks are also listed, albeit at lower positions, to satisfy the needs and expectations of the search engine user.

U.S. Patent No. 6,756,997, which is assigned to Gemstar Development Corporation of Hollywood, California, and entitled "Systems and Methods for Displaying and Recording Control Interface with Television Programs, Video, Advertising Information and Program Scheduling Information," describes an Electronic Programming Guide (EPG) which is displayable on a television screen and navigable using a specially configured remote controller.

Although the primary function of the EPG is to display television program scheduling, it also provides a viewer with the opportunity to select Virtual Channel Ad Slots or Ad Window displays that may advertise future-scheduled television programs and get additional information in the way of text or video clips. When the viewer highlights a Virtual Channel Ad Slot or Ad Window, the EPG may connect the viewer with an external database of information such as with a particular web site on the Internet. Ads can rotate so that different ads appear each time the user enters the same page/section of the Guide. Ads may also be assigned priorities to influence their positions in such rotation, and/or targeted according to the section of the Guide being viewed (e.g., movies, sports, children programming, etc.) or by Viewer Profiles.

In addition to personal computers and televisions, digital media players such as DVD players and video game consoles may also connect to the Internet. Currently, upon powering on these devices, the consumer is typically presented with a blank screen, an on-screen menu, or a corporate logo of the device manufacturer. It would be useful, however, to develop an Internet advertising business methodology and system which is suitable for media players and facilitate targeted marketing of related products in a financially accountable and/or budget controllable fashion. In addition, unlike previous forms of Internet advertising, it may also be advantageous to provide reasonable financial incentives to manufacturers of such media players to configure their products to support such an Internet advertising methodology and system.

### OBJECTS AND SUMMARY OF THE INVENTION

Accordingly, one object of one or more aspects of the present invention is a business methodology and system that provides Internet advertising on media players in such a fashion so as to facilitate targeted marketing to the users of those devices.

Another object of one or more aspects of the present invention is a business methodology and system that provides Internet advertising on media players in a financially accountable manner.

Another object of one or more aspects of the present invention is a business methodology and system that provides Internet advertising on media players in a budget controllable manner.

Still another object of one or more aspects of the present invention is a business methodology and system that provides Internet advertising on media players in such a fashion so as to provide reasonable financial incentives to the manufacturers of such media players to configure their products to support such methodology and system.

Yet another object of one or more aspects of the present invention is a business methodology and system that provides Internet advertising on media players in such a fashion so as to facilitate on-line bidding for advertising slots in such methodology and system.

These and additional objects are accomplished by the various aspects of the present invention, wherein briefly stated, one aspect is a method for advertising media promotions on media players, comprising: receiving information indicative of an identity of a manufacturer of a media player; transmitting a media promotion to the media player; and updating an account associated with the manufacturer so that the manufacturer may be compensated for the transmission of the media promotion.

Another aspect is a media object distribution server comprising a computer configured to receive information indicative of an identity of a manufacturer of a media player; transmit a media promotion to the media player; and update an account associated with the manufacturer so that the manufacturer may be compensated for the transmission of the media promotion.

Another aspect is a method for advertising media promotions on media players, comprising: determining an ad slot applicable to a media promotion request; and determining a media promotion to be provided in response to the media promotion request from a plurality of candidate media promotions based at least in part by available budgets of sponsors of the plurality of candidate media promotions.

Another aspect is a media object distribution server comprising a computer configured to determine an ad slot applicable to a media promotion request; and determine a media promotion to be provided in response to the media promotion request from a plurality of candidate media promotions based at least in part by available budgets of sponsors of the plurality of candidate media promotions.

Another aspect is a method for advertising media promotions on media players, comprising: installing program code on a media player that causes the media player to connect to a media object distribution server upon an activating event, provide information indicative of a manufacturer of the media player to the media object distribution server, and receive a media promotion for display to a user of the media player from the media object distribution server.

Another aspect is a media player comprising a processor and a memory, wherein the memory includes program code that causes the media player to connect to a media object distribution server upon an activating event, provide information indicative of a manufacturer of the media player to the media object distribution server, and receive a media promotion for display to a user of the media player from the media object distribution server.

Still another aspect is a system for bid-based delivery of advertising promotions to media players, comprising: one or more memory devices storing a plurality of manufacturer accounts respectively corresponding to manufacturers of media players, and a plurality of media objects respectively provided by corresponding advertisers; and a media object distribution server adapted to receive information indicative of an identity of a manufacturer of a media player, transmit one of the plurality of media objects to the media player, and update one of the plurality of manufacturer accounts corresponding to the identified manufacturer so that the identified manufacturer may be compensated for the transmission of the media object.

Additional objects, features and advantages of the various aspects of the present invention will become apparent from the following description of its preferred embodiment, which description should be taken in conjunction with the accompanying drawings.

### BRIEF DESCRIPTION OF THE DRAWINGS

**FIG. 1** illustrates a block diagram of a system for bid-based delivery of media promotions on Internet-connected media players, utilizing aspects of the present invention.
**FIG. 2** illustrates a flow diagram of an on-line bidding method for advertisers to bid for advertising slots, utilizing aspects of the present invention.
**FIG. 3** illustrates a flow diagram of a method for delivering a media object to an Internet-connected media player, utilizing aspects of the present invention.
**FIG. 4** illustrates a flow diagram of a ranked order method for identifying a media object to be delivered to an Internet-connected media player, utilizing aspects of the present invention.
**FIG. 5** illustrates a flow diagram of a weighted selection method for identifying a media object to be delivered to an Internet-connected media player, utilizing aspects of the present invention.
**FIG. 6** illustrates a flow diagram of a memory stored address method for configuring a media player to interact with a media object server for delivery of promotional media objects, utilizing aspects of the present invention.
**FIG. 7** illustrates a flow diagram of a memory stored address method performed by a media player for receiving a promotional media object, utilizing aspects of the present invention.
**FIG. 8** illustrates a flow diagram of a program embedded address method for configuring a media player to interact with a media object server for delivery of promotional media objects, utilizing aspects of the present invention.
**FIG. 9** illustrates a flow diagram of a program embedded address method performed by a media player for receiving a promotional media object, utilizing aspects of the present invention.
**FIG. 10** illustrates an advertiser summary report displayed on an advertiser's bidding terminal in the system of **FIG. 1**, utilizing aspects of the present invention.
**FIG. 11** illustrates a menu of downloadable media promotions displayed on a media player in the system of **FIG. 1**, utilizing aspects of the present invention.

### DETAILED DESCRIPTION OF THE PREFERRED EMBODIMENT

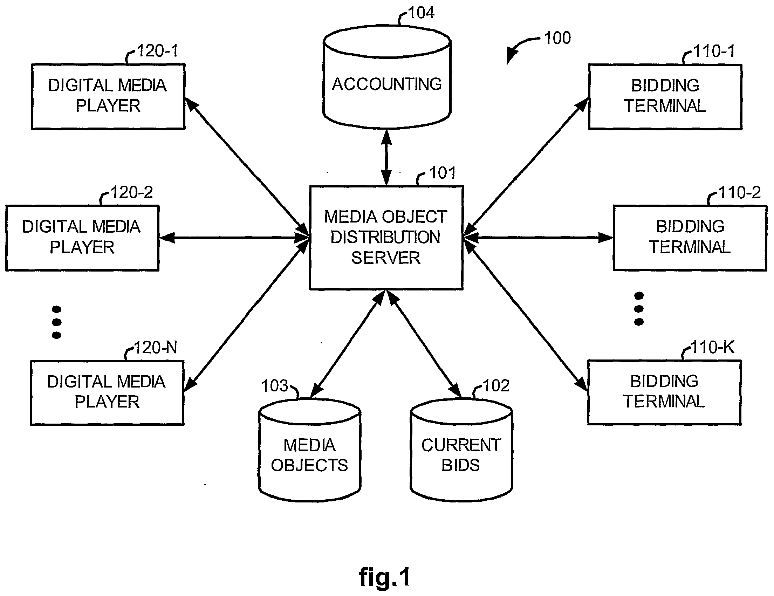

**FIG. 1** illustrates a block diagram of a system **100** for bid-based delivery of media promotions, such as movie trailers and game previews, on Internet-connected media players, such as DVD players and video game consoles. In this system, movie studios, game publishers, and other stakeholders or advertisers enter competing bids on self-service consoles, such as bidding terminals **110-1** to **110-K**, for the right to deliver their media promotions in the form of media objects to consumers upon startup (or other activating event) of their media players, such as digital media players **120-1** to **120-N**. Manufacturers of participating media players build or otherwise configure their products such that, upon startup (or other activating event), these devices automatically retrieve from a media object distribution server **101** the promotional media objects of the advertisers according to one or more pre-established formula based upon bidding for ad slots by the advertisers, and render the media objects on displays associated with the media players so that their users may view them.

Preferably, retrieval of the promotional media object involves a participating media player requesting a media object over the Internet from the media object distribution server **101** via a point-to-point datagram network, and the media object distribution server **101** returning the media object over the Internet to the requesting media player via a point-to-point datagram network. Alternatively, a broadcast network (such as cable or satellite dish) may be used as a communication medium instead of the Internet, wherein in lieu of the URL (or web address) of the media object distribution server **101**, the participating media player automatically switches to a dedicated broadcast channel upon startup (or other activating event). To accommodate this alternative implementation, all references to Internet-connected media players herein are understood to include and apply to such broadcast-network-connected media players as well.

Although the transmittal of media objects are described herein, in which case the transmitted items are referred to as being "static" since they are played on the media player without user interaction, it is to be appreciated that hyperlinkable documents may be transmitted instead or as well, in which case they are referred to as being "interactive" since the user may press a designated key on the media player or a control associated with the media player to retrieve another hyperlinked media object.

Bidding for ad slots may be resolved on a cost-per-impression or cost-per-interaction, or both, as appropriate, in any hard currency. The meaning of an "ad slot" as used herein will be understood by example as follows.

The population of all promotion display opportunities may optionally be divided into a finite number of segments (referred to herein as "ad slots") along any combination of the following dimensions:
- Media Player attributes (e.g., type, make, model, features, connection speed, playable formats, full screen vs. picture-in-picture display);
- Consumer attributes (e.g., geography, behavior, and demographics);
- Context attributes (e.g., time of day, day of week).

Each resulting ad slot is bid on separately by prospective advertisers. For example, if the population is segmented according to 3 attributes, each with 2 levels, the system will manage 2 x 2 x 2 = 8 concurrent bidding auctions.

The fetching and rendering of media objects may be triggered by any "activating event" such as:
- Startup or power down of the media player
- Media insertion into the media player
- Inactivity or idleness of the media player
- Scheduled background activity (e.g., firmware update)
- Designated user action (e.g., remote control keypress)
- Deliberate user request for media object (e.g., via an on-screen menu of scheduled future releases such as retail movie DVD, retail music CD, retail video game title, theatrical movie release, live music concert).

Preferably, the media players are dedicated-purpose, Internet-connected, consumer electronic devices that include a built-in display or video output connection. This class of media players generally includes, for example, Internet-connected optical media players (e.g., DVD, HD-DVD, Blu-Ray), video game consoles (e.g., Nintendo 64, Xbox, PlayStation), portable media players (e.g., Apple iPod, Archos Audio/Video Jukebox), personal digital assistants (e.g., Palm V, Handspring Visor), mobile/wireless communication devices (e.g., Nokia 6100, Motorola Razr), and other media playing hardware.

Promotions, on the other hand, are preferably video or graphic media objects showcasing currently available or future movies or games. Such promotions would generally include, for example, movie previews, movie graphics/posters, star interviews, "the making of' shorts, video game previews, and editorial reviews.

From a business perspective, participating media player manufacturers and/or their distributors configure their products to retrieve and display promotions from the media object distribution server **101**. Each time a promotional media object is rendered on a media player, the media object distribution server is notified. This notification may be either explicit (e.g., an electronic message sent from the media player to the server) or it may be implicit (e.g., inferable given that the media player requested a media object from the server). Communications are preferably performed via the Internet using the URL (or numerical address) of the media object distribution server **101**. Alternatively, a dedicated broadcast channel through a broadcast network may be used, in which case, the media players must be connected to a broadcast network in addition to the Internet.

In exchange for configuring their products to perform these functions, the manufacturers and/or distributors will receive a share of the proceeds received from advertisers of the promotions, or other negotiated payment. Accounting records for money owed to media player manufacturers and money owed from advertisers for media promotions are kept in an accounting database **104**.

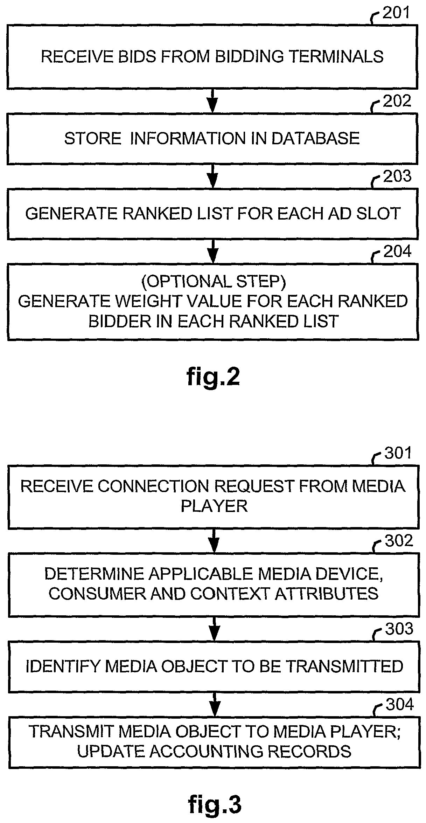

A bid management system of the present invention includes the media object distribution server **101**, a database of current bid information **102**, a library of media objects **103** to be provided as promotions to participating media players, and a number of application programs including those performing the methods described in reference to **FIGS. 2-11** as follows.

The operator of the bid management system licenses and certifies the participating media player manufacturers and/or distributors, manages the bid management system including soliciting and processing bids from prospective advertisers, collects advertising fees from the advertisers and disburses the agreed upon share of the proceeds (or other compensation) to the media player manufacturers and/or distributors.

**FIG. 2** illustrates a flow diagram of a method performed, for example, by the media object distribution server **101**, for processing bids received from prospective advertisers of ad slots (also referred to herein as "customers") using bidding terminals **110-1** to **110-K**. The biddable ad slots are displayed on the bidding terminals **110-1** to **110-K**, and bid on by customers. Bidding is typically in the form of a bid price for each impression (i.e., display of the advertiser's media object on a media player display, including those initiated by user interaction and those automatically displayed upon an activating event), or price for each interaction (i.e., request by a user to view the advertiser's media object on a media player display). The bidding period may be for the next week or the next month. It may also be for a shorter period such as daily or longer period such as annually or even perpetually (until a pre-established budget is used up).

Prior to accepting bids from a bidding terminal, the user of the terminal must register with the media object distribution server **101**. Generally, this requires the user to set up an advertiser account for billing purposes, and provide copies of all media objects that are to be promoted using the system **100**. Addition of new and deletion of old media objects may be performed at any time by the user using conventional edit account functionality.

In **201**, bids are received for the ad slots from all bidding customers via their bidding terminals. In addition to the price bids, as described above, additional bid information is provided at this time, including a budget (i.e., a maximum amount to be spent during the bid period, or alternatively, sub-periods of the bid period). In **202**, the bids and additional bid information are then stored in the current bids database **102**.

In **203**, a ranked list is generated for each of the ad slots by ranking the prospective advertisers bidding for those slots according to their bids with highest priced bids first or on the top of the list. Results may be secret (i.e., not disclosed to the bidders) or results may be made available to each of the bidders. Bidding may stop with just a single bid (single round bidding per period), or bidding may continue in an auction-like fashion by looping through **201-203** until either the highest bid for an ad slot remains unchanged or all bids for the ad slot remain unchanged. In the auction approach, an auction may be held each period so that the results remain fixed for that period, or the auction may be continuous for an unlimited period so that the results may be constantly changing and dynamic.

In **204**, weight values which are indicative of advertisement frequencies may be optionally generated for each ranked bidder in the ranked lists. The weight values may be determined from an algorithm or rule that simply takes into account the bid price so that higher priced bidders have their media objects transmitted (i.e., promoted) more frequently, or in a more sophisticated fashion also takes into account the budget of the prospective advertiser, past or current business levels with the advertiser, and/or other factors.

**FIG. 3** illustrates a flow diagram of a method performed, for example, by the media object distribution server **101**, for transmitting media objects to media players. In **301**, a connection request is received from a media player. As previously described, in an Internet based system, the connection request comes via the Internet to the URL of the media object distribution server **101**, and in a broadcast based system, the connecting media player selects a dedicated broadcast channel to receive the media object from the media object distribution server **101**.

In **302**, applicable media player device type, manufacturer identification, and consumer and context attributes are determined so that the applicable ad slot may be determined for the media player. Some of the attribute information is provided directly by the media player such as its device attributes and any consumer attributes stored in the media player at installation. Other of this information may be inferred from the IP address of the media player, such as its approximate geographical location. Context attributes may generally be determined independently, such as the time of day or date of the connection.

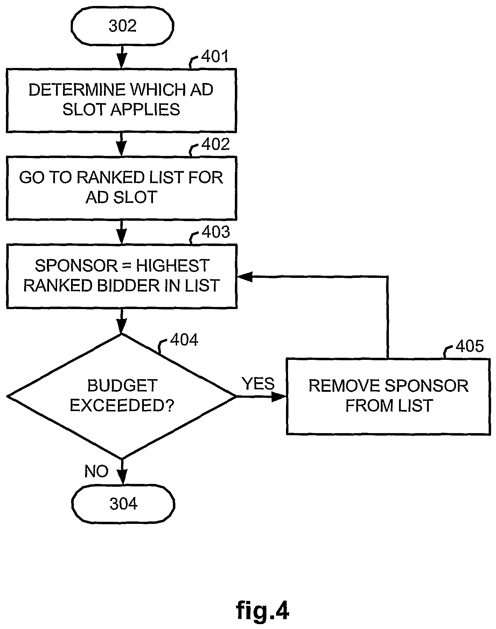

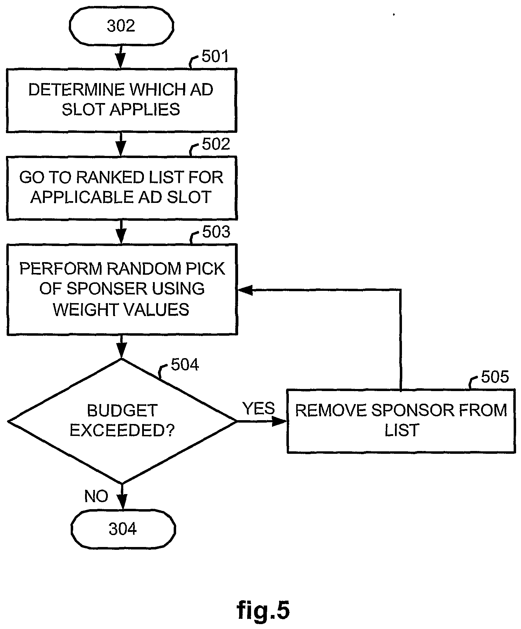

In **303**, the media object to be transmitted is identified. To do this, the ranked list generated in **203** of **FIG. 2** is used to first identify the advertiser whose media object is to be transmitted. One method for doing this is described in reference to **FIG. 4** that uses only the ranked list. Another method for doing this is described in reference to **FIG. 5** that additionally uses the weight values generated in **204** of **FIG. 2**. In **304**, a copy of the identified media object is then transmitted to the media player, and accounting records are updated so that the advertiser whose media object was transmitted is appropriated charged and the manufacturer of the media player to which the media object was transmitted is appropriately credited.

**FIG. 4** illustrates a flow diagram of a preferred method that is performed, for example, by the media object distribution server **101**, for performing **303** of **FIG. 3**. In **401**, a determination is made as to which ad slot applies, using the information received or otherwise determined in **302** of **FIG. 3**. In **402**, the ranked list for the applicable ad slot is located, and in **403**, the highest ranked bidder on the list is initially set as the SPONSOR.

In **404**, a determination is made whether the SPONSOR has exceeded its stated budget. As previously described, the budget was provided by the customer at either account setup or account editing. In order to determine whether the SPONSOR's budget has been exceeded, expenditures previously made by the SPONSOR for the ad slot are kept track of in the customer accounting file. The determination of whether the SPONSOR has exceeded its budget may then be simply made by comparing the SPONSOR's budget amount against its balance in its customer accounting file for the ad slot.

If the determination in **404** is YES, then in **405**, the SPONSOR is removed from the ranked list, and the method loops back to **403**, so that the highest ranked bidder remaining on the amended ranked list is now designated as the SPONSOR. The method then proceeds to **404** to determine whether this SPONSOR has exceeded its budget, and continues to loop through **403-405** until a SPONSOR is identified that has not yet exceeded its budget.

When the determination in **404** is NO, then a copy of the media object is transmitted to the connecting media player, and appropriate accounting records are updated as described in reference to **304** of **FIG. 3**.

**FIG. 5** illustrates a flow diagram of an alternative method that is performed, for example, by the media object distribution server **101**, for performing **303** of **FIG. 3**. In this method, **501-502** and **504-505** are identical functions as described in reference to **401-402** and **404-405** of **FIG. 4**, and therefore, their descriptions are not repeated.

In **503**, a random pick of a candidate SPONSOR is performed from the ranked bidders identified on the ranked list using probabilities determined from the weight values generated in **204** of **FIG. 2**. For example, probabilities for each ranked bidder in the ranked list may be determined, for example, by first summing all of the weight values for all ranked bidders in the ranked list, then dividing each bidder's weight value by this total.

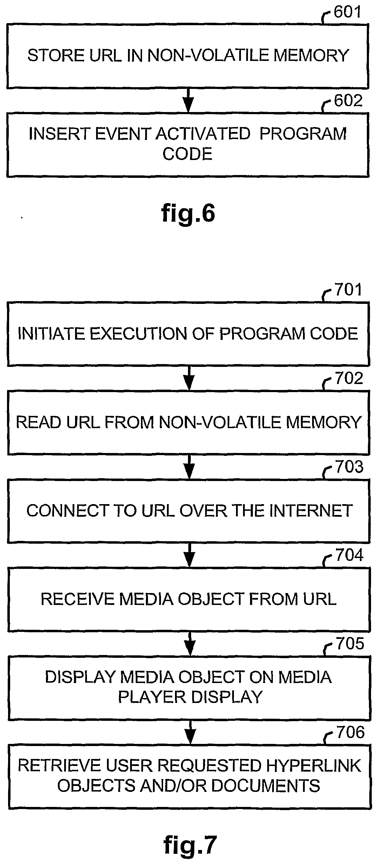

**FIG. 6** illustrates a flow diagram, as an example, of a method performed by a manufacturer or distributor of a media player to make it compatible with the present system for an Internet-connected mode of operation. In **601**, the manufacturer's or distributor's identification code and a URL (or web address) for the media object distribution center **101** are stored in a non-volatile memory (or alternatively, hard-wired in circuitry) within the media player, and in **602**, program code is inserted in the coding of the media player that automatically executes upon an activating event such as startup of the media player, reboot of the media player, or insertion of media in the media player, as the case may be. Additionally, the program code may be configured so as to store user information such as provided when registering the product on-line for warranty and software updates purposes, and subsequently provides the user information to the media distribution server **101** when connecting to it following an activating event.

**FIG. 7** illustrates a flow diagram, as an example, of a method performed by the program code inserted in the coding of the media player in **602** of **FIG. 6**. In **701**, execution of the program code is initiated upon detection of an activating event. In **702**, the program code reads the URL (or numerical address) of the media object distribution server **101** from the non-volatile memory (or alternatively, hard-wired circuitry) as stored in **601** of **FIG. 6**. In **703**, the program code causes the media player to connect to the URL (or numerical address) over the Internet, and transmit manufacturer, media player and consumer information (such as that received by the media object distribution server **101** and described in reference to **302** of **FIG. 3**) so that the correct media object may be determined and appropriate advertiser and manufacturer accounting records may be updated (such as those activities performed by the media object distribution server **101** and described in reference to **303-304** of **FIG. 3**). In **704**, the program code is further configured to receive, in response to such connection, media object(s) to be rendered and/or referenced on the display of the media player.

Although most of the discussion to this point describes single media objects as being transmitted, it is to be appreciated that a media player may fetch and render multiple media objects in concert (e.g., such as several promotions on a single screen) or merely references to media objects to be fetched separately and displayed by the requesting device.

In **705**, the program code then causes the media player to display the received media object(s) on a display associated with the media player. In **706**, if the media object displayed in **705** is a menu of hyperlinked objects or documents, the program code is further configured to cause the media player to retrieve any hyperlinked objects or documents requested by the user from the menu, and display the retrieved media objects or documents on the media player.

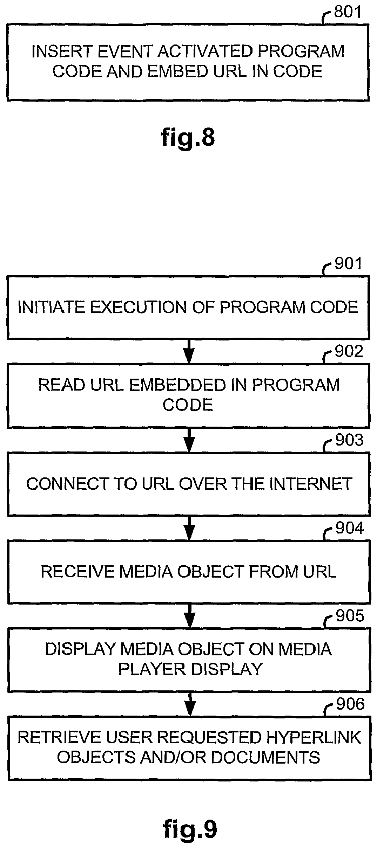

**FIG. 8** illustrates a flow diagram, as an example, of an alternative method (to that described in reference to **FIG. 6**) which is performed by a manufacturer or distributor of a media player to make it compatible with the system **100**. In **801**, program code is inserted in the coding of the media player that automatically executes upon an activating event, and the URL (or numerical address) for the media object distribution center **101** is embedded in the program code. In this case, when the URL is changed, a revised version of the program code must be installed on the media player, whereas in the case described in reference to **FIG. 6**, the new URL may simply be stored in the designated location of non-volatile memory. A code number identifying the recipient of any shared advertising revenues (i.e., the manufacturer or its distributor) may also be embedded in the coding along with the URL, or separately stored in memory as described in reference to **601** of **FIG. 6**.

**FIG. 9** illustrates a flow diagram, as an example, of a method performed by the program code inserted in the coding of the media player in **801** of **FIG. 8**. In this method, **901** and **903-906** are generally performed in the same manner as described in reference to **701** and **703-706** of **FIG. 7**, and therefore, need not be repeated here.

In **902**, however, the program code reads the URL for the media object distribution server **101** from its own code, rather than from a pre-designated non-volatile memory location as described in reference to **702** of **FIG. 7**.

The methods described in reference to **FIGS. 7** and **9** are readily modifiable for broadcast network application. In that case, a designated broadcast channel number is stored in memory or embedded in the program code so that the media player may automatically switch to that channel upon an activating event such as startup of the media player, bootup of the media player, or media insertion into the media player. By switching to the designated channel, a broadcasted promotional media object and/or HTML document may be received that is the same for all media players viewing that channel. Alternatively, where technically possible and commercially feasible, a selected media object whose identification is determined as described in reference to **FIG. 4** or **5** may be transmitted.

To provide feedback to customers (i.e., ad advertisers), each customer may log-in to the media object distribution server **101**, or other designated server used in the media object distribution business, and receive an individualized summary report of promotional activities performed on its behalf. The log-in procedure in this case may be a conventional user identification and password procedure.

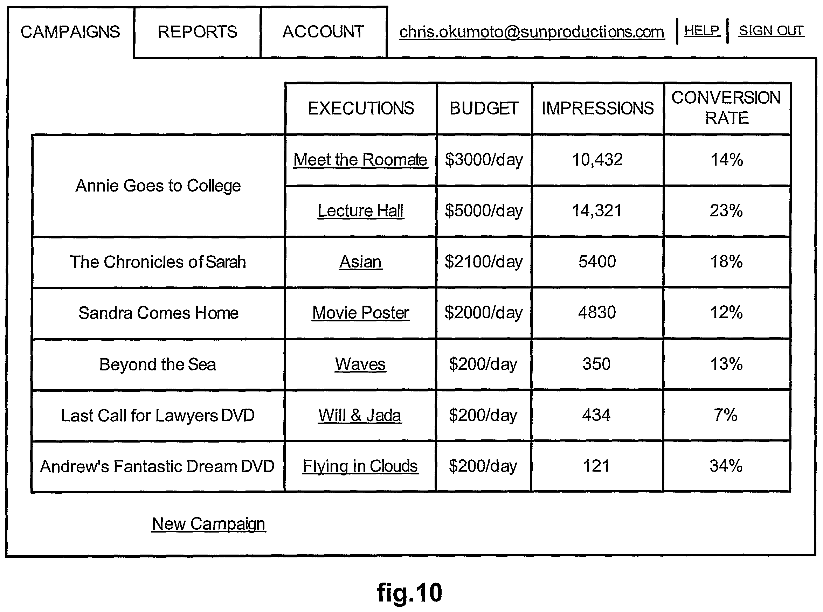

**FIG. 10** illustrates an example of a customer summary report. The logged-in user in this case is identified by his email address, chris.okumoto@sunproductions.com. Conventional HELP and SIGN OUT options are provided.

Three tabbed pages are selectable by the user for review. The top page titled CAMPAIGNS is shown. Other pages are REPORTS which may include data and analytics summarizing spending, conversion, demographics, and other things, and ACCOUNT which may be used to manage account attributes such as changing the user password, preferences, and other things.

The CAMPAIGNS page provides a summary of promotional activities being performed for the customer. As an example, titles for media being promoted (e.g., movies, music albums, video games, etc.) may be provided as shown in the far left-hand column. A column titled EXECUTIONS shows the promotional media objects being distributed by the system for the titled media. Note that the media "Annie Goes to College" has two promotional media objects. One titled "Meet the Roomate" and another titled "Lecture Hall", either or both which may be movie trailers or posters. As noted, underlined EXECUTIONS highlight new campaigns.

A column titled BUDGET indicates the budget for each of the promotional media objects. Note that in this case, the budget is specified on a daily basis, so that the ranked lists used in FIGS. 4 and 5 should be refreshed on a daily basis. A column titled IMPRESSIONS indicates the number of times a copy of the media object has been sent to a media player by the system since inception of its campaign, and a column titled COMVERSION RATE indicates the number of people who interacted with the promotion (e.g., navigated into it) divided by the number of people who viewed the promotional media object or HTML document.

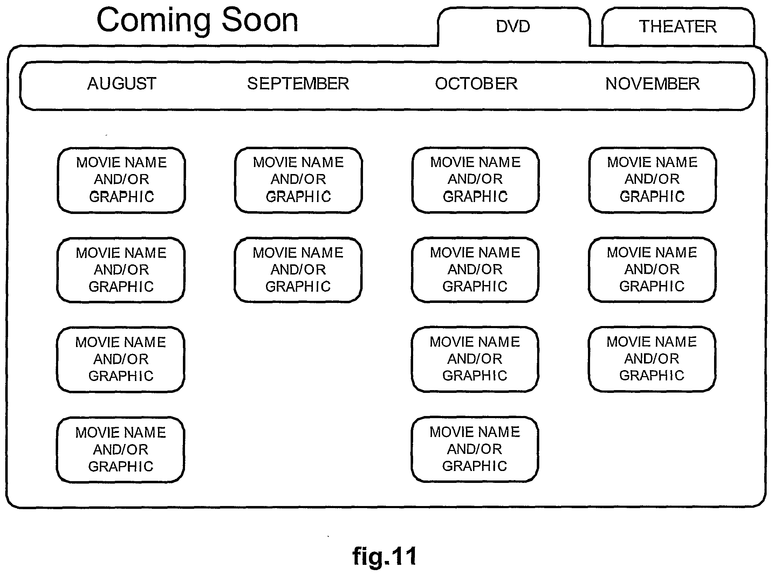

**FIG. 11** illustrates an on-screen menu whereby users may deliberately request to see promotions (i.e., useful detail information) about upcoming scheduled theatrical and retail DVD releases. Upon selection of any menu entry, the media player requests the corresponding media object from the media object distribution center, thereby earning the device manufacturer a commission or financial reward for displaying a targeted on-screen promotion. Other menus such as for navigating upcoming retail video game CD/DVD releases or upcoming music concert and retail music CD releases may similarly be generated and used.

Although the various aspects of the present invention have been described with respect to a preferred embodiment, it will be understood that the invention is entitled to full protection within the full scope of the appended claims.

The present disclosure includes, at least, the following items:
Item 1. A method for advertising media promotions on media players, comprising:
   receiving information indicative of an identity of a manufacturer of a media player; transmitting a media promotion to the media player; and
   updating an account associated with the manufacturer so that the manufacturer may be compensated for the transmission of the media promotion.
Item 2. The method according to item 1, further comprising:
   receiving information indicative of a model type of the media player; and
   prior to transmitting the media promotion, determining the media promotion to be transmitted using the received information.
Item 3. The method according to item 1, further comprising:
   receiving information indicative of a geographical location of the media player; and
   prior to transmitting the media promotion, determining the media promotion to be transmitted using the received information.
Item 4. The method according to item 1, further comprising:
   receiving information indicative of a user of the media player; and
   prior to transmitting the media promotion, determining the media promotion to be transmitted using the received information.
Item 5. The method according to item 1, further comprising:
   determining an ad slot associated with the media player; and
   determining a sponsor for the ad slot using a ranked list of sponsors associated with the ad slot;
   wherein the transmitting of the media promotion to the media player comprises transmitting a copy of a stored media promotion that has been previously provided by the sponsor.
Item 6. The method according to item 5, wherein the determining of the ad slot associated with the media player comprises:
   receiving information indicative of a model type of the media player; and
   determining the ad slot using the received information.
Item 7. The method according to item 5, wherein the determining of the ad slot associated with the media player comprises:
   receiving information indicative of a geographical location of the media player; and
   determining the ad slot using the received information.
Item 8. The method according to item 5, wherein the determining of the ad slot associated with the media player comprises:
   receiving information indicative of a user of the media player; and
   determining the ad slot using the received information.
Item 9. The method according to item 5, wherein the determining of the sponsor for the ad slot comprises:
   (a) selecting a candidate sponsor from a top position on the ranked list of sponsors;
   (b) determining whether a budget associated with the candidate sponsor for the ad slot will be exceeded if the candidate sponsor is determined to be the sponsor; and
   (c) determining that the candidate sponsor is the sponsor if the budget will not be exceeded, and
   removing the candidate sponsor from the ranked list of sponsors and repeating (a) through (c) if the budget will be exceeded.
Item 10. The method according to item 5, wherein the determining of the sponsor for the ad slot comprises:
   (a) randomly selecting a candidate sponsor from the ranked list of sponsors using probabilities determined from weight values respectively corresponding to positions of sponsors on the ranked list;
   (b) determining whether a budget associated with the candidate sponsor for the ad slot will be exceeded if the candidate sponsor is determined to be the sponsor; and
   (c) determining that the candidate sponsor is the sponsor if the budget will not be exceeded, and
   removing the candidate sponsor from the ranked list of sponsors and repeating (a) through (c) if the budget will be exceeded.
Item 11. The method according to item 1, wherein the transmitting of the media promotion to the media player comprises transmitting the media promotion over the Internet.
Item 12. The method according to item 1, wherein the transmitting of the media promotion to the media player comprises transmitting the media promotion over a broadcast channel.
Item 13. The method according to item 1, wherein the media player is an optical media player.
Item 14. The method according to item 1, wherein the media player is a video game console.
Item 15. The method according to item 1, wherein the media player is a personal digital assistant.
Item 16. The method according to item 1, wherein the media player is a mobile communication device.
Item 17. The method according to item 1, wherein the media promotion is an audio/video clip advertising a movie.
Item 18. The method according to item 1, wherein the media promotion is an audio/video clip advertising a video game.
Item 19. The method according to item 1, wherein the media promotion is a graphic media object.
Item 20. The method according to item 1, wherein the media promotion is an audio media object.
Item 21. A media object distribution server comprising:
   a computer configured to receive information indicative of an identity of a manufacturer of a media player;
   transmit a media promotion to the media player; and
   update an account associated with the manufacturer so that the manufacturer may be compensated for the transmission of the media promotion.
Item 22. A method for advertising media promotions on media players, comprising:
   determining an ad slot applicable to a media promotion request; and
   determining a media promotion to be provided in response to the media promotion request from a plurality of candidate media promotions based at least in part by available budgets of sponsors of the plurality of candidate media promotions.
Item 23. The method according to item 22, further comprising:
   receiving the media promotion request from a media player.
Item 24. The method according to item 23, wherein the ad slot is associated with the media player, and the determining of the ad slot comprises:
   receiving information indicative of a model type of the media player; and
   determining the ad slot using the received information.
Item 25. The method according to item 23, wherein the ad slot is associated with the media player, and the determining of the ad slot comprises:
   receiving information indicative of a geographical location of the media player; and
   determining the ad slot using the received information.
Item 26. The method according to item 23, wherein the ad slot is associated with the media player, and the determining of the ad slot comprises:
   receiving information indicative of a user of the media player; and
   determining the ad slot using the received information.
Item 27. The method according to item 22, wherein the determining of the media promotion to be provided comprises:
   determining a sponsor for the ad slot using a ranked list of sponsors associated with the ad slot.
Item 28. The method according to item 27, wherein the determining of the sponsor for the ad slot comprises:
   (a) selecting a candidate sponsor from a top position on the ranked list of sponsors;
   (b) determining whether a budget associated with the candidate sponsor for the ad slot will be exceeded if the candidate sponsor is determined to be the sponsor; and
   (c) determining that the candidate sponsor is the sponsor if the budget will not be exceeded, and
   removing the candidate sponsor from the ranked list of sponsors and repeating (a) through (c) if the budget will be exceeded.
Item 29. The method according to item 27, wherein the determining of the sponsor for the ad slot comprises:
   (a) randomly selecting a candidate sponsor from the ranked list of sponsors using probabilities determined from weight values respectively corresponding to positions of sponsors on the ranked list;
   (b) determining whether a budget associated with the candidate sponsor for the ad slot will be exceeded if the candidate sponsor is determined to be the sponsor; and
   (c) determining that the candidate sponsor is the sponsor if the budget will not be exceeded, and
   removing the candidate sponsor from the ranked list of sponsors and repeating (a) through (c) if the budget will be exceeded.
Item 30. The method according to item 27, further comprising:
   receiving the media promotion request from a media player;
   transmitting the media promotion to the media player; and
   updating an account associated with the sponsor so that the sponsor may be charged for the transmission of the media promotion to the media player.
Item 31. The method according to item 30, wherein the receiving of the media promotion request and the transmitting of the media promotion are performed over the Internet.
Item 32. The method according to item 30, wherein the receiving of the media promotion request and the transmitting of the media promotion are performed over a broadcast channel.
Item 33. A media object distribution server comprising:
   a computer configured to determine an ad slot applicable to a media promotion request, and determine a media promotion to be provided in response to the media promotion request from a plurality of candidate media promotions based at least in part by available budgets of sponsors of the plurality of candidate media promotions.
Item 34. A method for advertising media promotions on media players, comprising: installing program code on a media player that causes the media player to connect to a media object distribution server upon an activating event, provide information indicative of a manufacturer of the media player to the media object distribution server, and receive a media promotion for display to a user of the media player from the media object distribution server.
Item 35. The method according to item 34, wherein the activating event is startup of the media player.
Item 36. The method according to item 34, wherein the activating event is insertion of media in the media player.
Item 37. The method according to item 34, wherein the activating event is inactivity of the media player for a designated period of time.
Item 38. The method according to item 34, wherein the activating event is an occurrence of a scheduled background activity associated with the media player.
Item 39. The method according to item 34, wherein the activating event is a media promotion request initiated by a user of the media player.
Item 40. The method according to item 34, further comprising storing a URL for the media object distribution server in a memory of the media player so that the media player may connect to the media object distribution server over the Internet using the stored URL.
Item 41. The method according to item 34, further comprising storing a dedicated broadcast channel number in a memory of the media player so that the media player may connect to the media object distribution server over a dedicated broadcast channel using the stored dedicated broadcast channel number.
Item 42. The method according to item 34, wherein a URL for the media object distribution server is embedded in the program code so that the media player may connect to the media object distribution server over the Internet using the stored URL.
Item 43. The method according to item 34, wherein a dedicated broadcast channel number is embedded in the program code so that the media player may connect to the media object distribution server over a dedicated broadcast channel using the stored dedicated broadcast channel number.
Item 44. A media player comprising:
   a processor and a memory, wherein the memory includes program code that causes the media player to connect to a media object distribution server upon an activating event, provide information indicative of a manufacturer of the media player to the media object distribution server, and receive a media promotion for display to a user of the media player from the media object distribution server.
Item 45. A system for bid-based delivery of advertising promotions to media players, comprising:
   one or more memory devices storing a plurality of manufacturer accounts respectively corresponding to manufacturers of media players, and a plurality of media objects respectively provided by corresponding advertisers; and
   a media object distribution server adapted to receive information indicative of an identity of a manufacturer of a media player, transmit one of the plurality of media objects to the media player, and update one of the plurality of manufacturer accounts corresponding to the identified manufacturer so that the identified manufacturer may be compensated for the transmission of the media object.
Item 46. The system according to item 45, wherein the one or more memory devices further stores a plurality of advertiser accounts respectively corresponding to the advertisers having provided the plurality of media objects, and the media object distribution server is further adapted to update one of the plurality of advertiser accounts corresponding to the transmitted media object so that the corresponding advertiser may be charged for the transmission of the media object.
Item 47. The system according to item 45, wherein the media object distribution server is further adapted to receive bids for advertising slots from a plurality of bidding terminals operated by the advertisers having provided the plurality of media objects, and generate ranked lists for each of the advertising slots for determining which of the media objects is to be transmitted for each of the ad slots.
Item 48. The system according to item 47, wherein the ad slots are based at least in part upon media player attributes.
Item 49. The system according to item 47, wherein the ad slots are based at least in part upon consumer attributes.
Item 50. The system according to item 47, wherein the ad slots are based at least in part upon context attributes.

## Claims

1. A method for presenting a media object on a media player, the method comprising:
in response to an activating event, the media player automatically obtaining at least one media object from a media object distribution server;
wherein the activating event is one of:
startup of the media player;
power down of the media player;
idleness of the media player;
reboot of the media player;
insertion of media in the media player;
a scheduled background activity of the media player; and
the media player rendering said at least one media object for display.

2. A method according to claim 1, wherein said obtaining the media object comprises:
the media player transmitting a request to the server for the at least one media object in response to the activating event via a point-to-point network; and
the media player receiving the at least one media object from the server via the point-to-point network.

3. A method according to claim 2, wherein the point-to-point network is the Internet.

4. A method according to claim 1, 2, or 3, wherein said obtaining the at least one media object comprises:
the media player transmitting information to a server in response to the activating event, said information being indicative of a manufacturer of the media player;
the server selecting the at least one media object from a plurality of media objects, wherein the selection is based, in part, on the information received from the media player.

5. A method according to claim 1, wherein said obtaining the media object comprises:
the media player tuning to a predetermined broadcast channel in response to the activating event; and
the media player receiving the at least one media object via the broadcast channel.

6. A method according to any of the preceding claims, wherein the at least one media object comprises a hyperlink to another media object, the method further comprising:
in response to a user selection of said hyperlink, the media player retrieving said other media object and rendering said other media object for display.

7. One or more computer programs comprising computer readable instructions which, when executed by one or more processors, cause said one or more processors to perform a method according to any of the preceding claims.

8. A media player comprising:
means for, in response to an activating event, the media player automatically obtaining at least one media object from a media object distribution server, wherein the activating event is one of:
startup of the media player;
power down of the media player;
idleness of the media player;
reboot of the media player;
insertion of media in the media player;
a scheduled background activity of the media player; and
means for rendering said at least one media object for display.

9. A media player according to claim 8, wherein said means for obtaining the media object is configured to:
transmitting to the server, via a point-to-point network, a request for the at least one media object in response to the activating event; and
receiving from the server, via the point-to-point network, the at least one media object.

10. A media player according to claim 9, wherein the point-to-point network is the Internet.

11. A media player according to claim 8, wherein said means for obtaining the media object is configured to:
tune to a predetermined broadcast channel in response to the activating event; and
receive the at least one media object via the broadcast channel.

12. A system comprising:
a media player according to any of claims 8-11, wherein said means for obtaining the at least one media object is configured to transmit information to the server in response to the activating event, said information being indicative of a manufacturer of the media player; and
the server, wherein the server is configured to select the at least one media object from a plurality of media objects based, in part, on the information received from the media player.

13. A media player according to any of claims 8-11 or a system according to claim 12, wherein the at least one media object comprises a hyperlink to another media object, the media player further comprising:
means for, in response to a user selection of said hyperlink, retrieving said other media object and rendering said other media object for display.
